# NEW EUROPEAN PATENT SPECIFICATION

(11) **EP 2 837 312 B2**
(45) Date of publication and mention of the opposition decision: **03.04.2019**
(45) Mention of the grant of the patent: 20.04.2016
(21) Application number: 14182867.3
(22) Date of filing: 28.09.2011
(51) Int. Cl.: A47J 31/06, A47J 31/36, B65D 85/804

(54) **A system for preparing a beverage starting from an infusion product contained in an interchangeable capsule**
System zur Zubereitung eines Getränks ausgehend von einem Aufgussprodukt in einer auswechselbaren Kapsel
Système pour préparer une boisson à partir d'un produit à infuser contenu dans une capsule interchangeable

(30) Priority: 28.09.2010 IT BO20100581
(43) Date of publication of application: 18.02.2015
(62) Divisional of application: 11785095.8
(73) Proprietor: MVP S.r.l., Bologna (IT)
(72) Inventor: Macchiavelli, Davide, 40068 SAN LAZZARO DI SAVENA (IT); Rondelli, Raffaele, 40068 SAN LAZZARO DI SAVENA (IT)
(74) Representative: Boggio, Luigi

(56) References cited:
- EP-A1- 1 364 605
- EP-A1- 1 767 467
- EP-A1- 2 239 211
- WO-A1-2008/017608
- WO-A2-2009/110783
- WO-A2-2010/038213
- DE-A1-102007 024 579
- US-A- 5 897 899

## Description

The present invention relates to a system for preparing a beverage starting from an infusion product contained in an interchangeable capsule.

It is well known that interchangeable capsules contain a granular product, e.g. coffee, barley, powered milk, tea, chamomile etc.

Generally, the interchangeable capsules for infusion products comprise a cup, made of a plastic material, in which the infusion product is accommodated, and a lid arranged to close the cup and also made of a plastic material or a film which can be perforated.

When the capsule is inserted in a percolation chamber of a system for the preparation of a beverage, pressurized hot water is injected into the cup through a first plurality of holes made on the bottom of the capsule itself.

The water is mixed with the granular product in the capsule and flows out from the capsule itself through a second plurality of holes present in the lid of the cup.

An example of such a system is shown in European patent EP-B1-2 134 611 (SARA LEE).

In the solution suggested in EP-B1-2 134 611 (SARA LEE) the perforation tip used to perforate a traditional capsule does not perforate the bottom of the capsule of innovative type suggested in the aforesaid document because the bottom of said capsule of innovative type is always at a given distance from the perforation tip, also when the latter is in a completely extracted position. This new solution is suggested to avoid a large central piercing in the bottom which would require the constitution of preferential flow lines within the granular mass. The formation of such preferential flow lines is indeed considered undesirable for obtaining an aroma-rich infusion which, instead, should duly be extracted from the entire granular mass contained in the interchangeable capsule.

Furthermore, from EP-B1-2 134 611 (SARA LEE) it results that, in order to avoid the formation of preferential flow lines in the infusion mass, the bottom of the capsule must be distant from the bottom of the receptacle of the machine which accommodates the capsule itself. In such manner, the entire inlet section of the bottom of the capsule is not perforated by the perforation tip so that, instead, such an inlet section is entirely invested by the flow of infusion water.

However, the solution adopted in EP-B1-2 134 611 (SARA LEE) has the very significant drawback that the capsule must be necessarily shorter in order to avoid the tip, the receptacle being equal. Consequently, such a capsule is shorter and consequently contains less infusion product. For this reason, the infusion which derives is less rich in aromatic essences because not only there is less product in the capsule, but also because, being shorter, the permanence time of the water in the capsule is shorter, fact which obviously is detrimental to the quality of the produced infusion.

Document EP-A-1767467 discloses a system according to the preamble of independent claim 1.

Thus, it is the object of the present invention to make a system for preparing a beverage starting from an infusion product contained in an interchangeable capsule which is free from the aforesaid drawbacks.

According to the present invention, a system is therefore made for preparing a beverage starting from an infusion product contained in an interchangeable capsule as disclosed in Claim 1 or in any of the Claims depending directly or indirectly from Claim 1.

For a better understanding of the invention, an embodiment is described by way of non-limitative example only, with the aid of the accompanying drawings, in which:
- figure 1 shows a cross section of a part of a system for preparing a beverage according to the present invention;
- figure 2 shows a three-dimensional view of the inside of a capsule used in the system in figure 1;
- figure 3 shows an enlargement of a lid in a capsule according to claim 2; the lid being provided with a plurality of valves which in this figure are shown in closing position;
- figure 4 shows an enlargement of the lid in figure 3 with the same valves this time in opening position;
- figure 5 shows a longitudinal section of the capsule (with respective enlargement) according to figure 2 completed by a lid as shown in figures 3, 4;
- figure 6 shows the system in figure 1 with a first enlarged detail;
- figure 7 illustrates the system in figure 1 with a second enlarged detail; and
- figure 8 shows a longitudinal section of the capsule itself with enlargement of some details of the same.

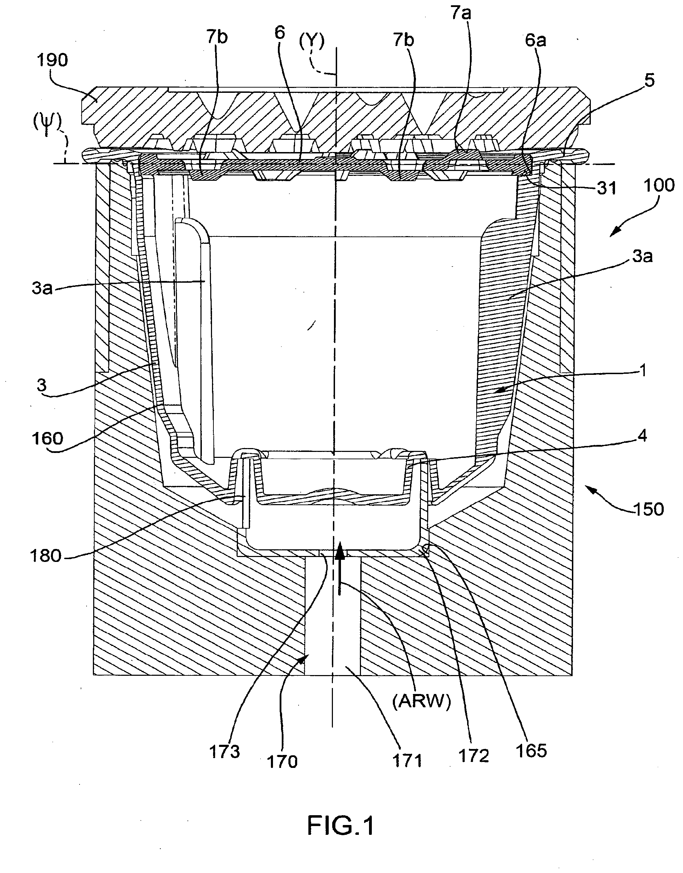

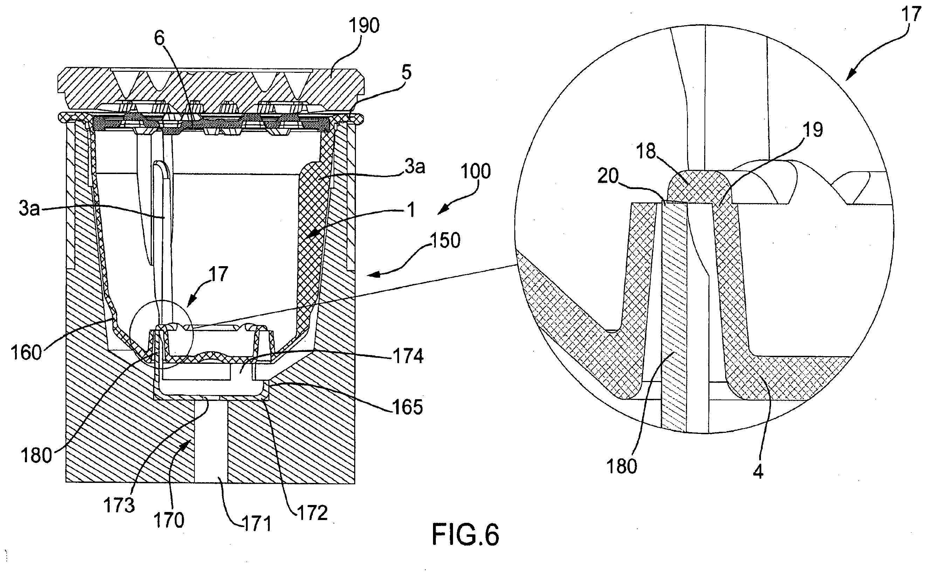

In figures 1, 6, 7, numeral 100 indicates as a whole a preferred embodiment (according to the present invention) of a system for the preparation of a beverage starting from an infusion product contained in an interchangeable capsule 1.

The system 100 comprises an interchangeable capsule 1, which will be described hereinafter in greater detail, and a percolating machine 150 for the preparation of infusions.

The percolating machine 150 comprises, in turn, a receptacle 160 (figure 1) adapted to contain the interchangeable capsule 1 and a dispensing device 170 for a pressurized fluid, in particular, pressurized water.

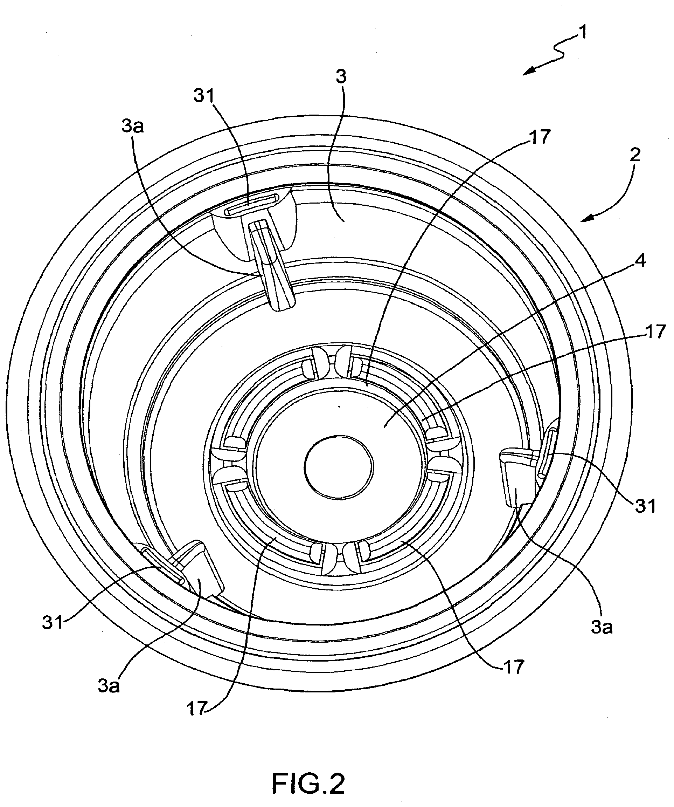

With reference in particular to figures 2, 3, 4, 5, 8, the interchangeable capsule 1 will be now described in greater detail before returning to the detailed description of the operation of the system 100.

Both incidentally and in the present context, the words "interchangeable capsule" must be understood as a capsule, usually for single use, of the disposable type, meaning that after infusing the granular product contained in the capsule such a capsule is disposed of (with all the product to be infused already used inside) removing it from the receptacle of the percolating machine. Evidently, a first "interchangeable capsule", once used and disposed of, is replaced, in general, by a second capsule of the same type, which takes the place of the first capsule in the specific receptacle of the percolating machine.

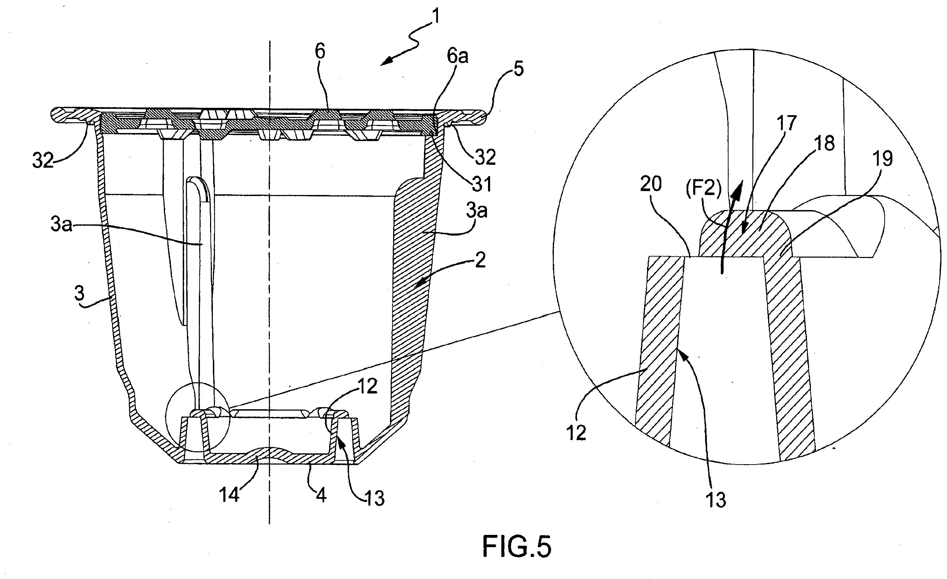

The capsule 1 (figure 5) comprises a cup-shaped structure 2 made in a single truncated-cone-shaped body and defined by a side wall 3, by a bottom wall 4, and by a flat circular crown 5 which extends radially from an upper edge of the side wall 3. As we will see, such a flat circular crown 5 supports the cup-shaped structure 2 in the specific receptacle 160 of the percolating machine 150 (figure 1) (see below).

Furthermore, three longitudinal ribs 3a arranged equally spaced apart by 120° extend towards the inside of the side wall 3. As explained in greater detail below, the three ribs 3a are used to reinforce the side wall 3 and are additionally used to break the streams of hot pressurized liquid in the cup-shaped structure 2 itself so as to take the hot water during the step of percolation into more intimate contact with the granular product to be infused. What is more, the three ribs 3a are also used to avoid the spontaneous stacking of the capsules 1 during the automatic handling for filling with the infusion product. In other words, the three ribs 3a on the inner wall of the cup-shaped structure 2 prevent the capsules 1 from being randomly and involuntarily stacked inside each other. If this were not so, i.e. if a cup-shaped structure 2 could randomly enter inside another cup-shaped structure 2, an incorrect handling and filling of all the cup-shaped structures 2 with the product to be infused would occur.

The cup-shaped structure 2 is made of a rigid plastic material or a thermosetting plastic material; preferably the plastic material used being of the biodegradable type.

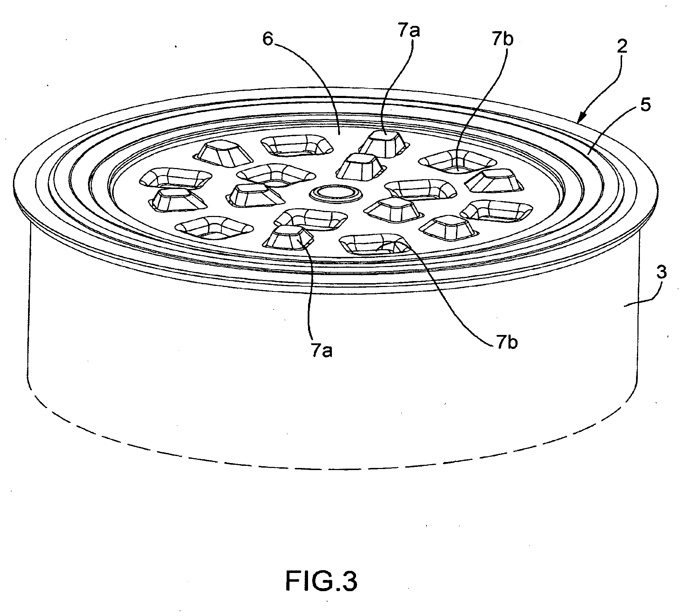

The capsule 1 further comprises a lid 6 which closes the free mouth of the cup-shaped structure 2 (figures 3, 4, 5) allowing the entrapment of the granular material (not shown) to be infused inside the cup-shaped structure 2 itself. As shown in particular in figure 5, the lid 6 is arranged inside the circular crown 5 so that the upper edge of the side wall 3 is underneath the lid 6 itself.

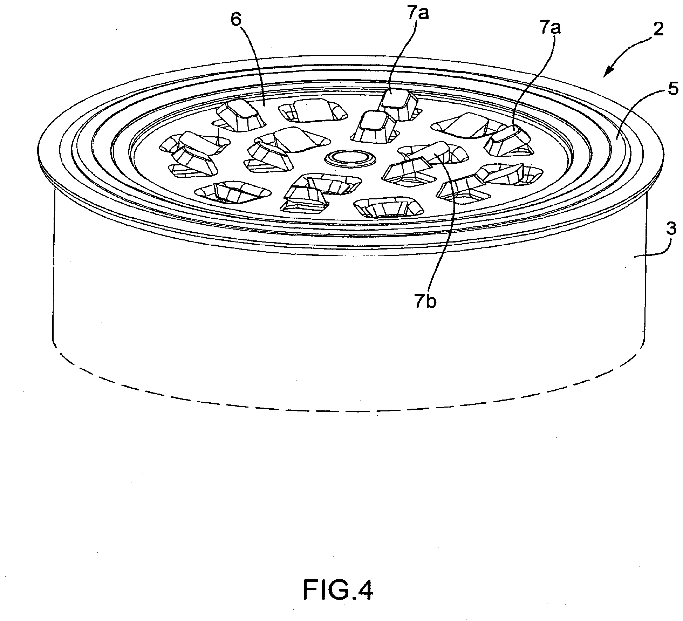

The lid 6 has a substantially circular shape in the particular embodiment shown in figures 3, 4. In use, the lid 6 is accommodated in a circular, crown-shaped recess 6a obtained in the upper area of the wall 3. The lid 6 is also made of a rigid plastic material.

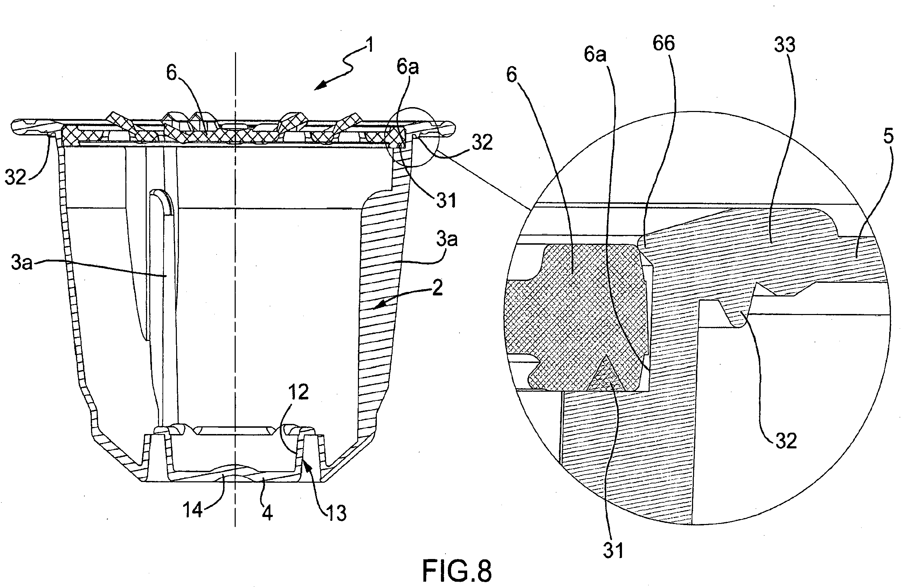

As shown in greater detail in figure 8, the upper part of the recess 6a includes an edge 66, which has an annular shape and projects internally towards a longitudinal symmetry axis (Y) of the cup-shaped structure 2. Such an edge 66 is also made of a plastic material and can thus be elastically deformable so as to allow the insertion of the lid 6 in the recess 6a. During the step of automatic coupling of the lid 6 with the respective cup-shaped structure 2, such a lid 6 is thus tightened between the bottom of the recess 6a, on one side, and the edge 66, on the other. Indeed, during the packaging of the capsule 1 in a specific packing machine (of known type and not illustrated), such a capsule 1 is subjected to high accelerations and thus, if the lid 6 were not tightened between the aforesaid elements, there would be the actual risk of a detachment of the lid 6 from the respective cup-shaped structure 2, with a consequent undesired spillage of product in the packaging machine.

What is more, as shown in particular in figure 8, there is a circular relief 31 on the bottom of the recess 6a. With the known methods, after filling the cup-shaped body 2 with the product to be infused and closing such a cup-shaped body 2 with the lid 6 in the aforesaid manner, the method proceeds with the localized melting (e.g. by means of ultrasounds) of the circular relief 31 only, so as to obtain a definitive fastening of the lid 6 to the bottom of the recess 6a.

The inner face of the lid 6 may be provided with a filter (not shown) of any type suited to the need. In particular, such a filter is, as known, elastically deformable.

The circular relief 31 may be either of the continuous type or of the interrupted type, meaning that, in the latter case, such a circular relief 31 consists of circular segments, e.g. three in number offset by 120° with respect to each other. The latter solution is shown in figure 2 where each circular relief 31 is placed at a rib 3a.

As still shown in figure 8, a sealing annular rib 32 having triangular section with a rayed tip is provided on the lower surface of the circular crown 5.

It has been found that the best results concerning the sealing of the capsule 1 with respect to the receptacle 180 of the system 100 are obtained if a sealing thickening 33 of the circular crown 5 is made (figure 8) at the sealing annular rib 32. As can be observed in figure 8 such a sealing thickening 33 is distributed on both faces of the circular crown 5.

In the embodiments shown in the accompanying figures (see in particular figures 3, 4), the lid 6 has a plurality of valves 7, arranged to allow the release of the infused beverage made by mixing hot water with the infusion product.

More in particular, the valves 7 may be of a first type, indicated by 7a, or of a second type, indicated by 7b. Both types 7a, 7b open towards the external (figure 4).

As shown, for example in figure 1, the valves 7a are on the opposite side of the valves 7b with respect to a symmetry plane (ψ) of the lid 6. In this manner, at least a portion of the valves 7a, 7b will certainly open by effect of the action exerted by the infusion water.

The choice of having two types of valves 7a, 7b was dictated by the need to simplify, as much as possible, the packaging machine (not shown) of the capsules 1. Indeed, if all the valves 7 were of type 7a, the packaging machine would need to orient the lids 6 during the coupling with the cup-shaped body 2. This would imply an evident complication (above all on sensor level) of the packaging machine of the capsules 1 complete with product. Instead, by adopting two types of valves 7a, 7b in the same lid 6, how the lid 6 is mounted in the recess 6a is indifferent.

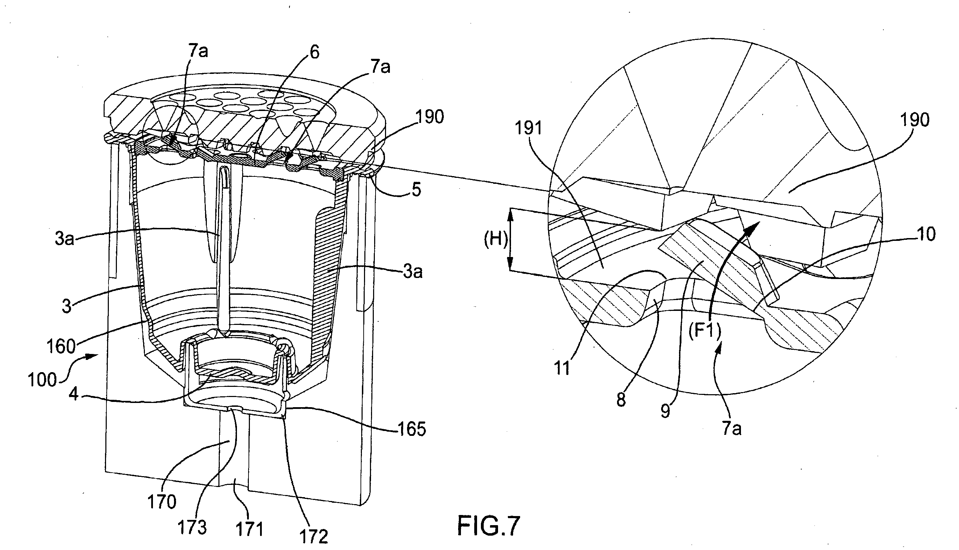

An enlargement of a generic valve 7a is shown in figure 7.

The valve 7a (but the same conditions obviously apply also to the valve 7b) has a respective cavity 8 and a respective flap 9 hinged to the rest of the lid 6 by means of a hinge 10, on one side, and a through cut 11 on the other.

In one embodiment (not shown), there is a preferential breakage line, which is broken by the pressurized liquid, instead of the through cut 11.

In actual fact, in the embodiment suggested in the accompanying figures the flap 9 is simply the bottom of the cavity 8.

In use, the pressure of the infused product attempting to exit from the cup-shaped body 2 exerts a force on the flap 9 making it turn about the hinge 10 according to an arrow (F1) (figure 7), towards the outside of the cup-shaped structure 2.

In particular, each flap 9 has a rectangular plan and a trapezoidal longitudinal section, and in case of a valve 7a, extends completely within the cup-shaped body 2 thus forming the respective cavity 8.

Advantageously, but not necessarily the valves 7 are obtained in one piece with the respect to the lid 6 by means of a single molding operation of a plastic material.

As clearly illustrated in figure 5, the bottom 4 comprises an annular hollow 12 arranged in symmetric position with respect to the longitudinal symmetry axis (Y) of the cup-shaped structure 2. A respective annular groove 13 which faces the outside of the cup-shaped structure 2 corresponds to the annular hollow 12.

Furthermore, the bottom 4 has an indentation 14 at axis (Y).

The presence of the annular hollow 12 and of the indentation 14 is motivated by the need to confer appropriate stiffening to the bottom 4, in particular due to the high pressure of the water to which the bottom 4 itself must be subjected.

As shown again in figure 5, there are four valves 17 (only one of which is visible in figure 5), offset by 90° with respect to each other on the bottom of the annular groove 13.

Each valve 17 has a respective flap 18 hinged to rest of the bottom 4 by means of a hinge, on one side, by a hinge 19, while a through cut 20 is provided on the other side.

In an embodiment (not shown) there is a preferential breakage line which is broken by the pressurized liquid, instead of the through cut 20.

The hot water distributed by the dispensing device 170 exerts a force on the flap 18 making it turn about the hinge 19 according to an arrow (F2) (enlargement in figure 5) towards the inside of the cup-shaped structure 2.

In particular, each flap 18 has a rectangular plan and substantially rectangular longitudinal section and, if stressed by the pressurized water extends within the cup-shaped structure 2.

Advantageously, but not necessarily, the four valves 17 are obtained in one piece with the rest of the bottom wall 4, and thus with the rest of the cup-shaped structure 2, by means of a single molding operation of a rigid plastic material.

We will now go back to the system 100 shown in figures 1, 6, 7.

A substantially cylindrical recess 165 is provided in the central part of the receptacle 160 and adapted to contain part of the aforesaid dispensing device 170.

Such a dispensing device 170, in turn, comprises a feeding duct 171 of the hot liquid and a distribution chamber 172 accommodated, at least partially, in the recess 165.

The distribution chamber 172 is in fluid communication on one side with a feeding pipe 171 by means of an opening 173, and, on the other side, with the annular groove 13. In brief, the pressurized hot water flows from the feeding pipe 171 to the annular groove 13 passing through the opening 173 according to an arrow (ARW).

The dispensing device 170 further comprises three perforation needles 180 (only one of which is visible in figure 5) arranged at 120° from each other. In other words, the perforation needles 180 constitute the traditional means provided in a plurality of percolating machines for perforating the bottom of the capsule 1. In use, the perforating needles 180 move towards the bottom 4 of the cup-shaped structure 2.

If there are preferential breakage lines instead of the through cuts 20, the pressure of the liquid is such to break such preferential breakage lines and, as mentioned, the flaps 18 turn about the hinges 19 (according to arrow (F2)), thus allowing the passage of pressurized hot water from the annular groove 13 to inside the cup-shaped structure 2. It is worth noting that the four valves 17 are all on the bottom of the annular groove 13, in use, the needles 180 are located inside such an annular groove 13.

In actual fact, in the case in hand, the perforating needles 180 do not perforate the bottom 4 in any manner, but the flaps 18 are only deformed by effect of the pressurized fluid distributed by the dispensing device 170.

It is also worth noting that, as mentioned, there are four valves 17, while there are three perforating needles 180. Thus, it is always certain that at least two perforating needles 180 always touch, without pushing, at least two flaps 18.

Thus, the fact that the perforating needles 180 touch the flaps 18 without pushing them allows, on one hand, to retrieve useful space to have more granular material to be infused in the cup-shaped structure 2, and, on the other hand, prevent that the flaps 18 can be sheared by the perforating needles 180 themselves and enter the infusion liquid. If this occurred, i.e. if there were particles of plastic or metal suspended in the infusion liquid, nearly certainly such particles would be ingested by the consumer with evident negative consequences.

Reference is made to figure 7 instead with regards to the valves 7a, 7b on the lid 6.

In the system 100, the receptacle 160 is closed at the top by an upper closing element 190 of the receptacle 160.

As shown in figure 7, a collection chamber 191 of the fluid after percolation is thus defined between the lid 6 and the upper closing element 190. In other words, all the percolated fluid which has already completely crossed the cup-shaped structure 2 and has exited from the valves 7 is accumulated in the collection chamber 191. It is worth noting that, there being no mechanical opening elements of the valves 7, it is the pressure of the water itself inside the cup-shaped structure 2 that opens the valves 7 themselves. From a closing position under the bias of the pressure of the percolated fluid, the valves 7 shift from a closing position of the outlet area to an opening position of the outlet area thus remaining in such an opening position also when the flow of percolated fluid is interrupted. The configuration of the lid 6 is thus permanently modified. It is worth noting that because the valves 7 remain in the opening position also after the interruption of the percolated fluid flow nothing else flows out from the cup-shaped structure 3 because the aforesaid filter (not shown) applied to the lid 6 blocks any passage of parts of the infusion product towards the outside. Being made of elastically deformable material, such filter is deformed but not perforated during the opening of the valves 7.

Furthermore, as shown again in figure 7, by graduating the height (H) of the collection chamber 191 it is possible to consequently graduate also the opening of the flaps 19 of the valves 7, and thus the water pressure in the capsule 1 being equal, to graduate the outlet speed of the water itself from the valves 7. By varying the height (H) the contact time of the water with the granular product to be infused can be indirectly graduated. Such a permanence time must be balanced and thus sufficiently long to allow, at the same time, a good infusion of the granular product without being excessively detrimental to the rapidity of the percolation operation.

In use, once a capsule 1 is inserted in the receptacle 160, such a receptacle 160, with respective dispensing device 170, is moved against the upper closing element 190 as shown in figure 1. The pressurized hot water will start flowing from the pipe 171 towards the annular groove 13 and the valves 17 which will open by effect of the pressure of the water itself. Once the pressurized hot water enters in the cup-shaped structure 2 it will start flowing towards the lid 6 without having preferential flow lines. Under the bias of the pressure of the percolated fluid the valves 17 shift from a closing position of the inlet area to an opening position of the inlet area thus remaining in such an opening position also when the flow of percolated fluid is interrupted.

Furthermore, preferably, but not necessarily introduction gaps of the water in the valves 17 oriented so as to create substantially tubular paths of the percolation fluid in the interchangeable capsule 1 can be included in order to encourage the turbulence of the water inside the cup-shaped structure 2, in order to involve as much granular material as possible in the percolation operation. The valves 17 create jets of pressurized hot water preferably directed against the side wall 3. Such jets are introduced by the ribs 3a creating the desired turbulence in the cup-shaped structure 2.

The main advantages of the system described above are:
- considerable increase of the amount of granular product in the cup-shaped body;
- possibility of graduating the permanence time of the hot water in contact with the granular product; and
- practically complete elimination of the preferential flow lines of the hot water in the cup-shaped structure; and
- complete elimination of any risk of contamination of the beverage there being no broken fragments coming from the bottom and/or the lid.

## Claims

1. System (100) for preparing an amount of predetermined beverage starting from an infusion product, the system (100) comprising:
(a) an interchangeable capsule (1), which comprises, in turn, a cup-shaped structure (2) associated to a corresponding lid (6), which enclose an inner space containing the infusion product, the lid (6) comprising an outlet area (7) for the infusion beverage from the cup-shaped structure (2); and
(b) a percolating machine (150) for preparing infusions; said percolating machine (150) comprising a capsule-holder receptacle (160) and a dispensing device (170) of a pressurized liquid;
**characterised in that** the outlet area (7) of said lid (6) comprises a plurality of valves (7a, 7b) which from a closed position of said outlet area (7) shift to an open position of said outlet area (7) only by the action of the pressurized beverage that flows within said cup-shaped structure (2) outwards so as to permanently modify the configuration of said lid (6); **in that**
said lid (6) is spaced from a top closing element (190) of the receptacle (160) by a distance (H); said distance (H) being indirectly adjustable during manufacture of said interchangeable capsule (1); and **in that**
said valves comprise a flap (9) said flap (9) opens more or less as a function of said distance (H) so as to graduate the percolating speed of the beverage.

## Patentansprüche

1. System (100) zur Zubereitung einer Menge eines festgelegten Getränks auf der Grundlage eines Aufgussprodukts, das System (100) umfassend:
a) eine austauschbare Kapsel (1), die wiederum eine tassenförmige Struktur (2) zugehörig zu einem entsprechenden Deckel (6) umfasst, die einen inneren Raum, der das Aufgussprodukt beinhaltet, umschließen, wobei der Deckel (6) einen Ausgussbereich (7) für das Aufgussgetränk aus der tassenförmigen Struktur (2) umfasst; und
b) eine Perkolatormaschine (150) zur Zubereitung von Aufgussgetränken; wobei die Perkolatormaschine (150) eine Kapselhalter-Aufnahme (160) und eine Ausgabevorrichtung (170) einer unter Druck stehenden Flüssigkeit umfasst;
**dadurch gekennzeichnet, dass** der Ausgussbereich (7) des Deckels (6) eine Vielzahl an Ventilen (7a, 7b) umfasst, die sich von einer geschlossen Position des Ausgussbereichs (7) in eine offene Position des Ausgussbereichs (7) nur durch die Wirkung der unter Druck stehenden Flüssigkeit, die in der tassenförmigen Struktur (2) nach außen fließt, verschieben, um die Konfiguration des Deckels (6) dauerhaft zu verändern;
und dadurch, dass der Deckel (6) von einem Oberseitenschließelement (190) der Aufnahme (160) durch einen Abstand (H) beabstandet ist; wobei der Abstand (H) während der Herstellung der austauschbaren Kapsel (1) indirekt einstellbar ist;
und dadurch, dass die Ventile eine Klappe (9) umfassen, wobei die Klappe (9) mehr oder weniger in Abhängigkeit des Abstands (H) öffnet, um die Perkoliergeschwindigkeit des Getränks abzustufen.

## Revendications

1. Système (100) de préparation d'une quantité de boisson prédéterminée à partir d'un produit d'infusion, le système (100) comprenant :
(a) une capsule interchangeable (1), qui comprend, quant à elle, une structure en forme de coupelle (2) associée à un couvercle (6) correspondant, qui renferment un espace intérieur contenant le produit d'infusion, le couvercle (6) comprenant une zone d'évacuation (7) pour la boisson d'infusion à partir de la structure en forme de coupelle (2) ; et
(b) une machine de percolation (150) pour la préparation d'infusions ; ladite machine de percolation (150) comprenant un réceptacle porte-capsule (160) et un dispositif de distribution (170) d'un liquide pressurisé ;
**caractérisé en ce que** la zone d'évacuation (7) dudit couvercle (6) comprend une pluralité de clapets (7a, 7b) qui à partir d'une position fermée de ladite zone d'évacuation (7) se décalent vers une position ouverte de ladite zone d'évacuation (7) uniquement sous l'effet de la boisson pressurisée qui s'écoule dans ladite structure en forme de coupelle (2) vers l'extérieur de manière à modifier à titre permanent la configuration dudit couvercle (6) ; et **en ce que**
ledit couvercle (6) est éloigné d'un élément de fermeture supérieur (190) du réceptacle (160) d'une distance (H) ; ladite distance (H) étant indirectement ajustable pendant la fabrication de ladite capsule interchangeable (1) ; et **en ce que**
lesdits clapets comprennent un rabat (9), ledit rabat (9) s'ouvrant plus ou moins en fonction de ladite distance (H) de façon à augmenter progressivement la vitesse de percolation de la boisson.
